# EUROPEAN PATENT APPLICATION

(11) **EP 3 971 845 A1**
(43) Date of publication of application: **23.03.2022**
(21) Application number: 21196086.9
(22) Date of filing: 10.09.2021
(51) Int. Cl.: G07C 9/00

(54) **ACCESS CONTROL WITH READER TO READER COMMUNICATION**

(30) Priority: 18.09.2020 US 202062706925 P
(71) Applicant: Carrier Corporation, Palm Beach Gardens, FL 33418 (US)
(72) Inventor: NOVOZHENETS, Yuri, Pittsford, 14534 (US); SHAIKH, Nadeem, 500081 Hyderabad (IN); LINGALA, Ramesh, 500081 Hyderabad (IN); NANDA, Avineet, 500081 Hyderabad (IN); THAKUR, Anil Kumar, 500081 Hyderabad (IN)
(74) Representative: Dehns

(57) **Abstract**

An access control system and a method for operating an access control system are provided. The access control system 100 includes a first access control device 110 and a second access control device 120, each configured to receive a signal 131 (e.g., an access credential) from a user device 130. The signal has a first signal strength at the first access control device 110 and a second signal strength at the second access control device 120. Each of the first access control device 110 and the second access control device 120 include a processor 111,121 configured to compare the first signal strength and the second signal strength to determine whether the first access control device 110 or the second access control device 120 is closest to the user device. The processor 111, 121 of the access control device 110, 120 closest to the user device 130 may be configured to determine whether the access credential is authorized.

## Description

The present invention relates to an access control system and to a method for operating an access control system.

Access control devices (e.g., access control readers, door locks, etc.) can be used to control various types of protected environments. For example, access control readers can be used to regulate the entry into and movement within a building (e.g., a commercial building). Depending on the needs of the protected environment, multiple access control devices may be used within a single protected environment. For example, there may be one access control reader on an entry side of an exterior door (e.g., placed outside the building), another access control reader on an exit side of the exterior door (e.g., placed inside the building), and a further access control reader or door lock on a nearby interior door (e.g., to a room inside the building). In certain instances, the access control devices may be within a few feet or even a few inches from one another. For example, the access control readers on either side of the exterior door may only be separated by the thickness of the wall.

Regardless of where the access control devices are placed, to access the protected environment, authorized access credentials must be presented (e.g., to the access control device). Conventionally, credentials have been presented to the access control devices using an RFID card, a FOB, a card with a magnetic stripe, and/or a mobile device. Mobile devices are becoming increasingly popular due, at least in part, to their ability of providing contactless access. Contactless access works by sending a signal (e.g., using Bluetooth, etc.) from the mobile device to the access control devices without requiring the physical interaction with the access control device. However, when multiple access control devices are within a relatively small area, more than one access control device may receive the signal, which may cause the wrong access control device to generate the unlocking signal. This may result in either the wrong door being unlocked (e.g., which could allow someone other than the person presenting the access credentials to access a protected environment), or wrong auditing information being generated. In either case, unnecessary confusion may be caused for the user (e.g., of the mobile device) and/or the security system (e.g., which relies on correct auditing information).

Accordingly, there remains a need for an access control system that is capable of preventing, or at least mitigating, the wrong access control device from generating the unlocking signal.

According to a first aspect the invention provides an access control system including a first access control device and a second access control device. Each access control device configured to receive a signal from a user device. The signal having a first signal strength at the first access control device and a second signal strength at the second access control device. The first signal strength being transmitted from the first access control device to the second access control device and the second signal strength being transmitted from the second access control device to the first access control device. Each of the first access control device and the second access control device respectively including a processor configured to compare the first signal strength and the second signal strength to determine whether the first access control device or the second access control device is closest to the user device.

Optionally, the signal includes an access credential.

Optionally, the processor of the access control device closest to the user device is configured to determine whether the access credential is authorized, the processor configured to generate an unlocking signal when the access credential is authorized.

Optionally, the access control system further includes at least one lock actuator communicatively connected with at least one of the first access control device and the second access control device, the lock actuator configured to unlock a mechanical or electronic lock when receiving the unlocking signal.

Optionally, the first access control device and the second access control device are communicatively connected to a shared lock actuator, the unlocking signal being transmitted from the access control device closest to the user device.

Optionally, the first access control device is communicatively connected to a first lock actuator, and the second access control device is communicatively connected to a second lock actuator, the unlocking signal being transmitted to the lock actuator communicatively connected with the access control device closest to the user device.

Optionally, the access control system further includes a database, at least one of the first access control device, the second access control device, and the user device in communication with the database.

Optionally, at least one of the first access control device, the second access control device, and the user device are configured to transmit a log entry to the database.

Optionally, the user device includes at least one of an RFID card, a FOB, a wearable device, and a mobile device.

Optionally, at least one of the first access control device and the second access control device are powered by a wired connection, and the user device is battery powered.

According to another aspect of the invention, a method for operating an access control system including a first access control device and a second access control device is provided. The method includes a step for receiving a signal from a user device at both the first access control device and the second access control device, the signal having a first signal strength at the first access control device and a second signal strength at the second access control device. The method includes a step for transmitting at least one of the first signal strength from the first access control device to the second access control device, and the second signal strength from the second access control device to the first access control device. The method includes a step for comparing, in at least one of the first access control device and the second access control device, the first signal strength with the second signal strength to determine whether the first access control device or the second access control device is closest to the user device.

Optionally, the signal includes an access credential.

Optionally, the method further includes a step for processing, in the access control device closest to the user device, the access credential to determine whether the access credential is authorized.

Optionally, the first access control device and the second access control device are in communication with a lock actuator.

Optionally, the method further includes a step for transmitting an unlocking signal, from the access control device closest to the user device, to the lock actuator, the lock actuator configured to unlock a mechanical or electronic lock when receiving the unlocking signal.

Optionally, at least one of the first access control device, the second access control device, and the user device are in communication with a database.

Optionally, the method further includes a step for transmitting a log entry to the database from at least one of the first access control device, the second access control device, and the user device.

Optionally, the user device includes at least one of an RFID card, a FOB, a wearable device, and a mobile device.

Optionally, at least one of the first access control device and the second access control device are powered by a wired connection, and the user device is battery powered.

Optionally, the transmitting of at least one of the first signal strength and the second signal strength is completed using a short-range communication, the short-range communication comprising at least one of Bluetooth, Bluetooth Low Energy (BTLE), Zigbee, infrared, ultra-wide band (UWB), and Wi-Fi.

The following descriptions of the drawings should not be considered limiting in any way. With reference to the accompanying drawings, like elements are numbered alike:
FIG. 1 is a schematic illustration of an access control system with a first access control device and a second access control device.
FIG. 2 is a schematic illustration of another access control system with a first access control device and a second access control device.
FIG. 3 is a flow diagram illustrating a method of operating an access control system including a first access control device and a second access control device.

Access control devices (e.g., including, but not limited to, access control readers, door locks, etc.) may grant or deny access to a particular environment (e.g., different areas of a commercial building) based on whether or not authorized credentials are received. The credentials are typically transmitted with a separate item (e.g., an RFID card, a FOB, a card with a magnetic stripe, and/or a mobile device). Depending on the capabilities of the separate item (e.g., whether the separate item can transmit a signal) the separate item may have to physically contact the access control device to transmit the access credentials. However, with contactless access being the more preferred means of presenting credentials, it is preferable if the separate item is capable of transmitting a signal to the access control device. It should be appreciated that user device described herein may be any device capable of transmitting a signal to an access control device. For example, the user device may be an RFID card, a FOB, a wearable device (e.g., a smartwatch, band, etc.), or a mobile device (e.g., such as a mobile phone or tablet). As described below, this user device may transmit a signal to multiple access control devices, which may communicate with one another (e.g., using a short-range communication such as Bluetooth, Bluetooth Low Energy (BTLE), Zigbee, infrared, ultra-wide band (UWB), and Wi-Fi or over a wired communication such as UART, Serial, Fiber-optic, SPI or Ethernet cable) to determine which access control device is closest to the user device.

This internal determination (e.g., done locally in the access control device(s), instead of at a remote server/database or controller) may ensure that the right access control device (e.g., the closest to the user device) completes the processing of the access credentials (e.g., generating an unlocking if the access credentials are authorized). By completing the determination and processing locally in the access control device(s), instead of at a remote server or controller, the delay in granting access may be minimized. This may be especially true when the network (of which the remote server(s) and controller(s) are dependent upon, the server(s) and/or the controller(s) being where the determination of closest access control device is often completed) has a slow connection or has a long latency. In addition, with the correct access control device completing the processing, the auditing information (e.g., which may indicate, among other things, when a certain user entered or exited at a certain entry/exit point) will be correct, which may help reduce confusion within the access control system.

It should be appreciated that each access control device may be connected to a controller, and each controller may be connected to a network (e.g., using a gateway, such as a router). The network may contain one or more databases maintained at a central server (e.g., which may be either on-site and/or cloud-based) and relevant parts (e.g., the updated list of authorized access credentials) of the databases may be downloaded to individual controllers. The controllers may communicate the authorized access credentials and any associated limitations or expirations of the authorized access credentials to the access control devices for storage and later processing (e.g., by a processor in the access control device). In certain instances, individual access control devices may be connected directly to the network (e.g., without using a controller), and/or may receive authorized access credentials and any associated limitations or expirations of the authorized access credentials from an external device (e.g., a user device, such as a mobile device, computing device, mobile tablet, etc.).

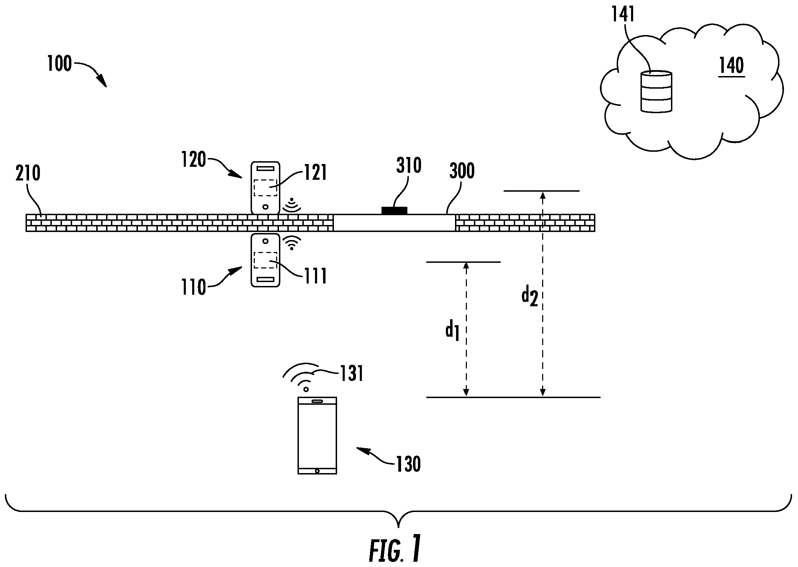

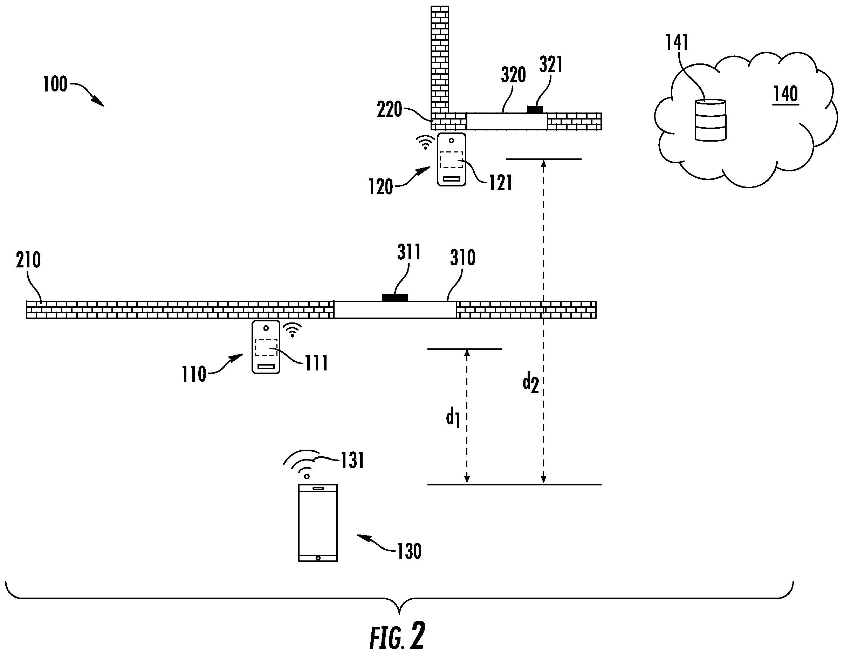

With reference now to the Figures, various schematic illustrations of an access control system 100 are shown in FIGs. 1 and 2. FIG. 1 illustrates a first embodiment of the access control system 100 with the first access control device 110 and the second access control device 120 positioned on the same wall 210. FIG. 2 illustrates a second embodiment of the access control system 100 with the first access control device 110 and the second access control device 120 positioned on separate walls 210, 220. In each embodiment both the first access control device 110 and the second access control device 120 may be within a relatively close distance of one another. A relatively close distance may be viewed as any distance in which the signal 131 from the user device 130 may be received by both the first access control device 110 and the second access control device 120. In certain instances, the signal 131 from the user device 130 may be transmitted using a short-range communication (e.g., Bluetooth, Bluetooth Low Energy (BTLE), Zigbee, infrared, ultra-wide band (UWB), and Wi-Fi).

The signal 131 from the user device 130 may have a different signal strength at the first access control device 110 than the second access control device 120. This difference is signal strength may be due, at least in part, the difference in distance from the user device 130. For example, as shown in FIGs. 1 and 2, the first access control device 110 may be closer to the user device 130 than the second access control device 120, which may cause the first signal strength (as received by the first access control device 110) to be be stronger (e.g., have a higher intensity) than the second signal strength (as received by the second access control device 120). FIGs. 1 and 2 depict the first access control device 110 separated from the user device 130 by a first distance d₁, and the second access control device 120 separated from the user device 130 by a second distance d₂. It should be appreciated that in certain instances the difference in distance (e.g., d₁ ― d₂) may be only a few inches, and in other instances the difference in distance (e.g., d₁ ― d₂) may be a few feet. FIG. 1 illustrates the difference in distance (e.g., d₁ ― d₂) between the first access control device 110 and the second access control device 120 being only a few inches (e.g., separated by the thickness of the wall 210). FIG. 2 illustrates the difference in distance (e.g., d₁ - d₂) between the first access control device 110 and the second access control device 120 being a few feet (e.g., separated by the spacing between the first wall 210 and the second wall 220). It should be appreciated, as mentioned above, that the difference in distance (e.g., d₁ - d₂) may be any distance in which the signal 131 from the user device 130 may be received by both the first access control device 110 and the second access control device 120.

The first access control device 110 and the second access control device 120 may be configured to transmit their respective signal strengths to one another. For example, the first signal strength may be transmitted from the first access control device 110 to the second access control device 120, and the second signal strength may be transmitted from the second access control device 120 to the first access control device 110. It should be appreciated that first signal strength and the second signal strength may be transmitted wirelessly (e.g., using a short-range communication such as Bluetooth, Bluetooth Low Energy (BTLE), Zigbee, infrared, ultra-wide band (UWB), and Wi-Fi) or over a wired communication (e.g. UART, Serial, Fiber-optic, SPI or Ethernet cable). The first access control device 110 and the second access control device 120 may compare, in a processor 111, 121, the first signal strength with the second signal strength to determine whether the first access control device 110 or the second access control device 120 is closest to the user device 130. For example, the processor 111, 121 may determine that the access control device 110, 120 with the highest intensity signal strength is the closest to the user device 130. Each respective processor 111, 121 may be, but is not limited to, a single-processor or multi-processor system of any of a wide array of possible architectures, including field programmable gate array (FPGA), a central processing unit (CPU), application specific integrated circuits (ASIC), digital signal processor (DSP) or graphics processing unit (GPU) hardware arranged homogenously or heterogeneously.

Although FIGs. 1 and 2 depict only two access control devices (e.g., the first access control device 110 and the second access control device 120) it should be appreciated that the access control system 100 may include any number access control devices (e.g., at least two of which may be in close proximity of the user device 130), at least two of which are configured to transmit their received signal strengths to one another (e.g., to determine which access control device is closest to the user device 130). Additionally, it is envisioned that each access control device 110, 120 may be connected to a door 310, 320. In certain instances (as shown in FIG. 1) multiple access control devices 110, 120 may be connected to a single door 310 and in other instances (as shown in FIG. 2) each access control device 110, 120 may be connected to an individual door 310, 320. It should be understood that although described herein to be connected to one or more door(s) 310, 320, the access control devices 110, 120 may be connected to other apparatuses (e.g., turnstiles, safes, elevators, etc.). Each door 310, 320 may include a lock actuator 311, 321 to lock or unlock a mechanical or electronic lock (not shown). It should be appreciated that the lock actuators 311, 321 and the access control devices 110, 120 may be configured together as part of a single unit in certain instances (e.g., in the case of a door lock) or individually as separate units (e.g., in the case of an access control reader).

The signal 131 from the user device 130 may include an access credential. In certain instances, the access credential is processed locally in one of the access control devices 110, 120 (e.g., not processed by a controller). For example, the access credential may be processed in the closest access control device to the user device 130, which, as depicted in FIGs. 1 and 2 is the first access control device 110 in certain instances. Each access control device 110, 120 may include a storage medium (not shown), capable of storing authorized access credentials. The authorized access credentials and any associated limitations may be transmitted (either directly or indirectly (through a controller (not shown)) from at least one of an external device (e.g., mobile device, computing device, mobile tablet, etc.) and a database 141 to the access control device 110, 120 for storage and/or processing of access credentials. It should be appreciated that the storage medium may include, but is not limited to, any of the following: a hard disk, a random access memory (RAM), a read-only memory (ROM), an erasable programmable read-only memory (EPROM or Flash Memory), a static random access memory (SRAM), a portable compact disc read-only memory (CD-ROM), a digital versatile disk (DVD), a memory stick, and any suitable combination of the foregoing. The authorized access credentials stored in the storage medium may be accessible by the processor 111, 121 so as to allow the processor 111, 121 to compare the access credentials received from the user device 130 with the stored authorized access credentials.

The processor 111, 121 that completes the determination of whether the access credential is authorized may generate an unlocking signal when the access credential is authorized (e.g., matches a stored authorized access credential). This unlocking signal may be transmitted wirelessly (e.g., using a short-range communication such as Bluetooth, Bluetooth Low Energy (BTLE), Zigbee, infrared, ultra-wide band (UWB), and Wi-Fi) or over a wired communication (e.g. UART, Serial, Fiber-optic, SPI or Ethernet cable) to the lock actuator 311, 321 associated with the particular access control device 110, 120. This lock actuator 311, 321 may be configured to unlock a mechanical or electronic lock when receiving the unlocking signal. To ensure that the unlocking signal is transmitted to the correct lock actuator 311, 321 (e.g., associated with a particular access control device 110, 120), each lock actuator 311, 321 may be linked with an access control device 110, 120. For example, the lock actuators 311, 321 and the access control devices 110, 120 each may be given unique device identifiers (e.g., to enable the lock actuators 311, 321 and the access control devices 110, 120 to know and trust one another).

Each unique device identifier may consist of a unique numeric or alphanumeric code, and may be stored in the database 141 or the storage medium of the access control device 110, 120 (e.g., the database 141 or access control device 110, 120 may store which particular unique device identifier, associated with a particular lock actuator 311, 321, is linked with which other particular unique device identifier, associated with a particular access control device 110, 120). It is envisioned that at least a portion of a unique device identifier may be transmitted with the unlocking signal (e.g., the lock actuator 311, 321 may receive a portion of its own unique device identifier or a portion of a unique device identifier of a particular access control device 110, 120 when receiving an unlocking signal). It should be appreciated that at least portion of a unique device identifier may be transmitted between the access control devices 110, 120 when communicating (e.g., when transmitting their associated signal strengths). For example, the first access control device 110 may transmit at least a portion of its own unique device identifier or at least a portion of the second access control devices 120 unique device identifier to the second access control device 120 when transmitting the first signal strength.

To ensure that the correct auditing information (made of multiple log entries) is generated and the correct lock actuator 311, 321 receives the unlocking signal, the unlocking signal may only be transmitted from the access control device 110, 120 closest to the user device 130. As shown in FIGs. 1 and 2, the first access control device 110 may be closest to the user device 130 when the first distance d₁ is less than the second distance d₂. This auditing information may be stored in a database 141. The database 141, in certain instances, is housed in the network 140 (e.g., the same network 140 as the access control system 100). At least one of the first access control device 110, the second access control device 120, and the user device 130 may be in communication (e.g., to transmit a log entry) with the database 141 (e.g., to transmit authorized access credentials and/or log entries). The log entry may be transmitted wirelessly (e.g., using a short-range communication such as Bluetooth, Bluetooth Low Energy (BTLE), Zigbee, infrared, ultra-wide band (UWB), and Wi-Fi) or over a wired communication (e.g. UART, Serial, Fiber-optic, SPI or Ethernet cable) to the database 141. It should be appreciated that the log entry may be either directly or indirectly (e.g., through a controller (not shown)) to the database 141. Each log entry may include information such as which user (e.g., associated with a particular user device 130 and/or access credential) accessed or attempted to access a particular access point (e.g., door 310, 320, turnstile, elevator, etc.) at a certain time.

It is envisioned that at least one of the first access control device 110 and the second access control device 120 may be powered by a wired connection, and the user device 130 may be battery powered. Due to the way in which the above-described access control system 100 functions (e.g., completing the determination of closest access control device 110, 120 locally, in the access control devices 110, 120), the load on the battery of the user device 130 may be minimal. For example, instead of consuming potentially large amounts of power by completing the processing in the user device 130, the access control system 100 described herein may only use the user device 130 as a beacon (e.g., a signal 131 generator). As such, the user device 130 can be virtually any low power device (e.g., any device capable of transmitting a signal 131 to the access control devices 110, 120). For example, the user device 130 may be an RFID card, a FOB, a wearable device (e.g., a smartwatch, band, etc.), or a mobile device (e.g., such as a mobile phone or tablet).

Although described above to be useful in a commercial building, it is envisioned that the access control system 100 described herein may be useful in a variety of different settings. For example, the access control system 100 may be useful in any type of environment where multiple access control devices 110, 120 are within a relatively small area. As described above, the configuration and operation of the access control system 100 makes it possible to prevent, or at least mitigate, the wrong access control device 110, 120 from generating the unlocking signal, which may cause confusion to the user (e.g., of the user device 130) and/or the security system (e.g., which relies on correct auditing information).

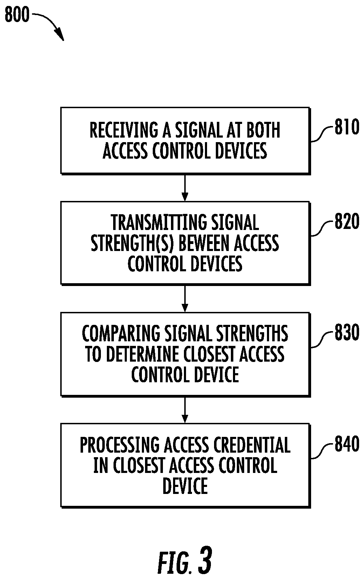

An exemplary method 800 of operating an access control system 100 is illustrated in FIG. 3. The method 800 may be performed, for example, using either of the exemplary access control systems 100 shown in FIGs. 1 and 2, which include a first access control device 110 and a second access control device 120. The method 800 includes step 810 for receiving a signal 131 (e.g., which may include an access credential) from a user device 130 at both the first access control device 110 and the second access control device 120. The signal 131 having a first signal strength at the first access control device 110 and a second signal strength at the second access control device 120. The method 800 includes step 820 for transmitting at least one of the first signal strength from the first access control device 110 to the second access control device 120, and the second signal strength from the first access control device 110 to the second access control device 120. It should be appreciated that first signal strength and the second signal strength may be transmitted wirelessly (e.g., using a short-range communication such as Bluetooth, Bluetooth Low Energy (BTLE), Zigbee, infrared, ultra-wide band (UWB), and Wi-Fi) or over a wired communication (e.g. UART, Serial, Fiber-optic, SPI or Ethernet cable). The method 800 includes step 830 for comparing, in at least one of the first access control device 110 and the second access control device 120, the first signal strength with the second signal strength to determine whether the first access control device 110 or the second access control device 120 is closest to the user device 130. The method 800 may include step 840 for processing, in the access control device 110, 120 closest to the user device, the access credential to determine whether the access credential is authorized. If authorized, an unlocking signal may be transmitted from the access control device 110, 120 closest to the user device 130 to a lock actuator 311, 321, the lock actuator 311, 321 configured to unlock a mechanical or electronic lock when receiving the unlocking signal.

The use of the terms "a" and "and" and "the" and similar referents, in the context of describing the invention, are to be construed to cover both the singular and the plural, unless otherwise indicated herein or cleared contradicted by context. The use of any and all example, or exemplary language (e.g., "such as", "e.g.", "for example", etc.) provided herein is intended merely to better illuminate the invention and does not pose a limitation on the scope of the invention unless otherwise claimed. No language in the specification should be construed as indicating any non-claimed elements as essential to the practice of the invention.

While the present disclosure has been described with reference to an exemplary embodiment or embodiments, it will be understood by those skilled in the art that various changes may be made and equivalents may be substituted for elements thereof without departing from the scope of the present invention, which is defined by the claims. In addition, many modifications may be made to adapt a particular situation or material to the teachings of the present disclosure. Therefore, it is intended that the present invention not be limited to the particular embodiment disclosed as the best mode contemplated for carrying out this present invention, but that the present invention will include all embodiments falling within the scope of the claims.

## Claims

1. An access control system comprising:
a first access control device and a second access control device, each configured to receive a signal from a user device, the signal comprising a first signal strength at the first access control device and a second signal strength at the second access control device, the first signal strength being transmitted from the first access control device to the second access control device and the second signal strength being transmitted from the second access control device to the first access control device, each of the first access control device and the second access control device respectively comprising:
a processor configured to compare the first signal strength and the second signal strength to determine whether the first access control device or the second access control device is closest to the user device.

2. The access control system of claim 1, wherein the signal comprises an access credential.

3. The access control system of claim 2, wherein the processor of the access control device closest to the user device is configured to determine whether the access credential is authorized, the processor configured to generate an unlocking signal when the access credential is authorized.

4. The access control system of claim 3, further comprising at least one lock actuator communicatively connected with at least one of the first access control device and the second access control device, the lock actuator configured to unlock a mechanical or electronic lock when receiving the unlocking signal.

5. The access control system of claim 4, wherein the first access control device and the second access control device are communicatively connected to a shared lock actuator, the unlocking signal being transmitted from the access control device closest to the user device.

6. The access control system of claim 4, wherein the first access control device is communicatively connected to a first lock actuator, and the second access control device is communicatively connected to a second lock actuator, the unlocking signal being transmitted to the lock actuator communicatively connected with the access control device closest to the user device.

7. The access control system of any preceding claim, further comprising a database, at least one of the first access control device, the second access control device, and the user device in communication with the database.

8. The access control system of claim 7, wherein at least one of the first access control device, the second access control device, and the user device are configured to transmit a log entry to the database.

9. The access control system of any preceding claim, wherein the user device comprises at least one of an RFID card, a FOB, a wearable device, and a mobile device.

10. The access control system of any preceding claim, wherein at least one of the first access control device and the second access control device are powered by a wired connection, and the user device is battery powered.

11. A method for operating an access control system comprising a first access control device and a second access control device, the method comprising:
receiving a signal from a user device at both the first access control device and the second access control device, the signal comprising a first signal strength at the first access control device and a second signal strength at the second access control device;
transmitting at least one of the first signal strength from the first access control device to the second access control device, and the second signal strength from the second access control device to the first access control device; and
comparing, in at least one of the first access control device and the second access control device, the first signal strength with the second signal strength to determine whether the first access control device or the second access control device is closest to the user device.

12. The method of claim 11, wherein the signal comprises an access credential, optionally the method comprising processing, in the access control device closest to the user device, the access credential to determine whether the access credential is authorized.

13. The method of claim 12, wherein the first access control device and the second access control device are in communication with a lock actuator, optionally the method comprising transmitting an unlocking signal, from the access control device closest to the user device, to the lock actuator, the lock actuator configured to unlock a mechanical or electronic lock when receiving the unlocking signal.

14. The method of claim 13, wherein at least one of the first access control device, the second access control device, and the user device are in communication with a database, optionally the method comprising transmitting a log entry to the database from at least one of the first access control device, the second access control device, and the user device.#

15. The method of any of claims 11 to 14, wherein the transmitting of at least one of the first signal strength and the second signal strength is completed using a short-range communication, the short-range communication comprising at least one of Bluetooth, Bluetooth Low Energy (BTLE), Zigbee, infrared, ultra-wide band (UWB), and Wi-Fi.
